# FASCICULE DE BREVET EUROPEEN

(11) **EP 2 887 710 B1**
(45) Date de publication et mention de la délivrance du brevet: **17.08.2016**
(21) Numéro de dépôt: 14197434.5
(22) Date de dépôt: 11.12.2014
(51) Int. Cl.: H04L 29/08, H04L 29/06, H04W 4/20, H04W 12/02

(54) **Procédé de partage synchrone d'image**
Verfahren zur synchronen Teilung eines Bildes
Method for synchronous image sharing

(30) Priorité: 17.12.2013 FR 1362822
(43) Date de publication de la demande: 24.06.2015
(73) Titulaire: Orange, 75015 Paris (FR)
(72) Inventeur: Guignon, Richard, 35150 Amanlis (FR); Thomas, Henry, 35200 Rennes (FR); Guegan, Delphine, 35830 Betton (FR)

(56) Documents cités:
- EP-A1- 2 360 890
- US-A1- 2003 058 275
- US-A1- 2005 066 165

## Description

### ART ANTERIEUR

La présente invention se situe dans le domaine du partage de documents entre terminaux et concerne particulièrement un procédé de partage synchrone d'image.

La multiplication des moyens de communication et en particulier l'adoption massive de terminaux connectés de type smartphone par le grand public facilite aujourd'hui le partage et la publication de de divers contenus sur internet. En particulier, le partage de photo tient une place prépondérante dans l'activité numérique des internautes. Hélas, une fois publiée, même au sein d'un cercle d'ami restreint, il devient très difficile de contrôler la diffusion de ces images.

Une grande partie des internautes s'inquiètent aujourd'hui que d'autres personnes puissent utiliser leurs photos ou vidéos, et éprouvent le besoin de mieux contrôler leur diffusion sur Internet.

Afin de diffuser une photo au sein d'un cercle restreint de correspondants, il est possible d'utiliser des systèmes de messagerie comme par exemple le MMS (Multimedia Messaging System), le courrier électronique ou encore différentes messageries instantanées. Malgré tout, il n'est pas possible d'interdire la rediffusion de contenus ainsi partagés, ni d'annuler leur diffusion après l'envoi.

Certains services tels que l'application Snapchat^{®} de la société Snapchat, Inc. ou encore le service « poke » de la société Facebook^{®} proposent de limiter le risque de rediffusion de photos partagées en supprimant le média quelques secondes après leur consultation par le destinataire. Cependant, il est assez aisé pour un destinataire de réaliser une capture d'écran pendant l'intervalle de temps durant lequel la photo est affichée. D'autre part, le délai imparti pour consulter l'image peut parfois être trop bref pour en apprécier le contenu et il est impossible pour l'expéditeur de contrôler le moment et la durée de la consultation par le destinataire.

Il existe donc un besoin pour les utilisateurs de pouvoir contrôler plus finement le partage d'un contenu vers un correspondant tout en ayant l'assurance que celui-ci ne sera pas rediffusé vers un tiers.

### RÉSUMÉ DE L'INVENTION

À cet effet, la présente invention propose d'améliorer la situation.

Un premier aspect de la présente invention concerne un procédé de partage synchrone d'un document entre un premier et un second terminal comportant des étapes de transmission d'un message vers le second terminal comportant les coordonnées d'au moins un point de contact définies à partir du document à partager; à l'ouverture d'une fenêtre temporelle de visualisation définie par l'intersection d'une première et d'une seconde fenêtre temporelle définies respectivement pour le premier et le second terminal, chacune étant bornée par la réception, en provenance du terminal, d'un message d'accord de partage déclenché par une action sur le au moins un point de contact et la réception d'un message d'abandon déclenché par l'arrêt de l'action sur le au moins un point de contact, de transmission du document et d'une commande d'affichage du document vers le second terminal ; et de transmission d'une commande de suppression du document à la fermeture de la fenêtre temporelle de visualisation.

Le procédé propose ainsi de transmettre vers le second terminal une notification de partage d'une image par exemple. Cette notification comprend en particulier les coordonnées correspondant à l'emplacement d'au moins un point de contact sur l'image. Les coordonnées des points de contact peuvent être calculées automatiquement à partir de l'image de façon à ce qu'ils soient toujours répartis de manière identique pour une image donnée. Un signal d'accord de partage est envoyé par le second terminal lorsque qu'une action est détectée sur l'écran à l'emplacement du au moins un point de contact, par exemple lorsque l'utilisateur y appose ses doigts. La réception de ce message provoque l'ouverture d'une première fenêtre temporelle associée au second terminal qui peut être refermée par exemple lorsque l'action sur les points de contact est stoppée sur le terminal. De même, un signal d'accord de partage est envoyé par le premier terminal lorsqu'une action est détectée sur l'écran, par exemple lorsque l'utilisateur y appose ses doigts à l'emplacement du au moins un point de contact. La réception de ce message provoque l'ouverture d'une seconde fenêtre temporelle associée au premier terminal qui peut être refermée par exemple lorsque l'action sur les points de contact est stoppée sur le terminal. Une nouvelle fenêtre temporelle, dite de visualisation, peut alors être définie par l'intersection de la première et de la seconde fenêtre temporelle. À l'ouverture de la fenêtre de visualisation, l'image est transmise au second terminal assortie d'une commande d'affichage de l'image sur le second terminal.

Ainsi, l'image n'est affichée sur le second terminal que durant la période pendant laquelle l'utilisateur du premier terminal et l'utilisateur du second terminal effectuent simultanément une action prédéfinie à l'emplacement du au moins un point de contact. L'utilisateur à l'origine du partage peut ainsi contrôler l'instant où le destinataire peut consulter l'image ainsi que la durée de consultation.

Lorsqu'un signal d'abandon est reçu d'un terminal, par exemple suite à l'arrêt de l'action sur les points de contact sur un des terminaux, le procédé propose de transmettre aux terminaux une commande de suppression de l'image partagée.

Le procédé apporte ainsi une garantie que le document partagé ne pourra pas être rediffusé ultérieurement. D'autre part, en imposant que l'action sur les points de contact soit maintenue durant la visualisation, le procédé rend plus délicate la réalisation d'une éventuelle capture d'écran.

Selon un mode de réalisation particulier, le procédé est tel qu'il comporte, à la réception préalable d'une commande de partage du document comportant le document à partager, une étape de mémorisation du document.

Le document peut ainsi être mémorisé temporairement à la réception d'une demande de partage et jusqu'à l'ouverture de la fenêtre de visualisation. Dans le cas d'une mise en oeuvre du procédé sur un serveur par exemple, le procédé permet ainsi au serveur de disposer de l'image dès la réception de la demande de partage afin de calculer les coordonnées des points de contact. Les coordonnées des points de contact peuvent ainsi être transmis au second terminal indépendamment du document lui-même, ce dernier n'étant transmis qu'à l'ouverture de la fenêtre de visualisation. Ainsi l'image n'est pas disponible sur le second terminal en dehors de la fenêtre temporelle de visualisation. Ce dernier point apporte une sécurité quant à une pratique peu scrupuleuse qui consisterait à analyser la mémoire du terminal afin d'en extraire l'image en dehors de la fenêtre temporelle pendant laquelle la visualisation de l'image est autorisée.

Selon un mode de réalisation particulier, le procédé est tel qu'une commande de suppression du document est émise vers le second terminal lorsqu'aucun message en provenance de A n'est reçu pendant un intervalle de temps prédéterminé.

Le procédé permet ainsi de garantir qu'en cas de perte de la connexion réseau avec le premier terminal, une commande de suppression sera envoyée au second terminal afin de stopper la restitution de l'image partagée.

Selon un deuxième aspect, l'invention concerne un procédé de commande de partage synchrone d'un document sur un premier terminal à écran tactile vers un second terminal caractérisé en ce qu'il comporte des étapes de transmission d'une commande de partage du document ; à la réception d'un message d'accord de partage en provenance du second terminal, de transmission d'un message d'accord de partage déclenchant l'ouverture d'une fenêtre temporelle de visualisation lorsqu'une action sur au moins un point de contact est détectée sur l'écran du premier terminal, et de fermeture de la fenêtre temporelle de visualisation et de transmission d'au moins une commande d'abandon du partage du document lorsque l'arrêt de l'action sur le au moins un point de contact est détecté sur l'écran du premier terminal.

Le procédé de commande de partage propose ainsi d'envoyer une commande de partage vers une entité pouvant mettre en oeuvre le procédé de partage synchrone, comme par exemple un serveur accessible via un réseau de télécommunications. La commande de partage peut comporter par exemple une image que l'utilisateur du premier terminal souhaite partager avec un utilisateur d'un second terminal. Un accord de partage peut alors être reçu, par exemple suite à une action prédéfinie de l'utilisateur du second terminal à l'emplacement de points de contact, signalant ainsi l'ouverture d'une fenêtre temporelle associée au second terminal. Suite à la réception de l'accord de partage, le premier terminal peut inviter l'utilisateur à effectuer une action sur ou ou plusieurs points de contact et émettre à son tour un accord de partage signalant l'ouverture d'une fenêtre temporelle associée au premier terminal. Une entité mettant en oeuvre le procédé de partage synchrone peut alors ouvrir une fenêtre temporelle de visualisation autorisant l'affichage du document sur le second terminal. Lorsque l'action sur les points de contact cesse sur l'un des terminaux, une commande d'abandon peut être émise, signalant ainsi la fermeture de la fenêtre temporelle associée au premier terminal et la fermeture de la fenêtre de visualisation, mettant fin par conséquent à l'affichage du document sur le second terminal. Le procédé selon l'invention permet ainsi à l'utilisateur du premier terminal d'avoir la garantie que le document ne peut être visualisé que pendant la période pendant laquelle il effectue une action à l'emplacement des points de contact. D'autre part, le procédé apporte la possibilité à l'utilisateur du premier terminal de renoncer à partager un document même après l'envoi d'une commande de partage.

Selon un autre mode de réalisation particulier, le procédé de commande de partage est tel que le message d'accord de partage est retransmis périodiquement à intervalle prédéterminé tant que la fenêtre temporelle de visualisation est ouverte.

Le message d'accord est ainsi répété tant que l'utilisateur du premier terminal maintient l'action sur les points de contact. De cette façon, le second terminal peut détecter une éventuelle perte de connexion réseau et stopper la restitution du document partagé lorsqu'il ne reçoit plus l'accord de partage pendant une période prédéterminée.

Selon un autre aspect, l'invention concerne un dispositif de partage synchrone de document entre un premier et un second terminal, tel qu'il comporte des modules de définition des coordonnées d'au moins un point de contact à partir du document ; de transmission d'un message comportant les coordonnées du au moins un point de contact; de détermination d'une fenêtre temporelle à partir de messages reçus ; de calcul d'une intersection entre deux fenêtres temporelles ; de transmission d'un document à partager, d'une commande d'affichage du document, et d'une commande d'abandon du partage du document.

Selon un autre aspect, l'invention concerne un dispositif de commande de partage synchrone de document sur un terminal à écran tactile caractérisé en ce qu'il comporte des modules de transmission d'une commande de partage de document; de réception d'un message d'accord de partage ; de détection d'une action sur au moins un point de contact à l'écran, et de transmission d'un accord de partage et d'une commande d'abandon du partage.

L'invention concerne également un serveur comprenant un dispositif de partage synchrone de document.

L'invention concerne aussi un terminal comprenant un dispositif de commande de partage synchrone de document.

Selon un autre mode de réalisation, l'invention concerne un terminal comprenant un dispositif de partage synchrone de document et un dispositif de commande de partage synchrone de document.

L'invention concerne aussi un système de partage synchrone de document tel qu'il comprend un serveur comprenant un dispositif de partage synchrone, un premier terminal comprenant un dispositif de commande de partage synchrone et un second terminal.

Selon un autre aspect, l'invention concerne un programme d'ordinateur comportant les instructions pour l'exécution du procédé de partage synchrone de document et/ou du procédé de commande de partage synchrone de document, lorsque le programme est exécuté par un processeur.

Un dernier aspect de l'invention se rapporte à un support d'enregistrement lisible par un ordinateur sur lequel est enregistré un programme d'ordinateur comprenant des instructions pour l'exécution des étapes du procédé de partage synchrone de document ou les instructions pour l'exécution des étapes du procédé de commande de partage synchrone de document.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre un environnement adapté pour la mise en oeuvre des procédés de partage et de commande de partage synchrone, selon un mode particulier de réalisation de l'invention ;
- La figure 2 illustre sous la forme d'un chronogramme les principales étapes des procédés de partage et de commande de partage synchrone selon un mode particulier de réalisation de l'invention ;
- La figure 3 illustre sous la forme d'un chronogramme les principales étapes des procédés de partage et de commande de partage synchrone selon un autre mode particulier de réalisation de l'invention ;
- Les figures 4a et 4b illustrent une action pouvant être effectuée par un utilisateur sur l'écran d'un terminal à l'emplacement de points de contact ;
- La figure 5 illustre l'architecture d'un dispositif adapté pour la mise en oeuvre du procédé de partage synchrone selon un mode particulier de réalisation de l'invention; et
- La figure 6 illustre l'architecture d'un dispositif adapté pour la mise en oeuvre du procédé de commande de partage selon un mode particulier de réalisation de l'invention.

### DESCRIPTION D'UN MODE DE RÉALISATION PARTICULIER

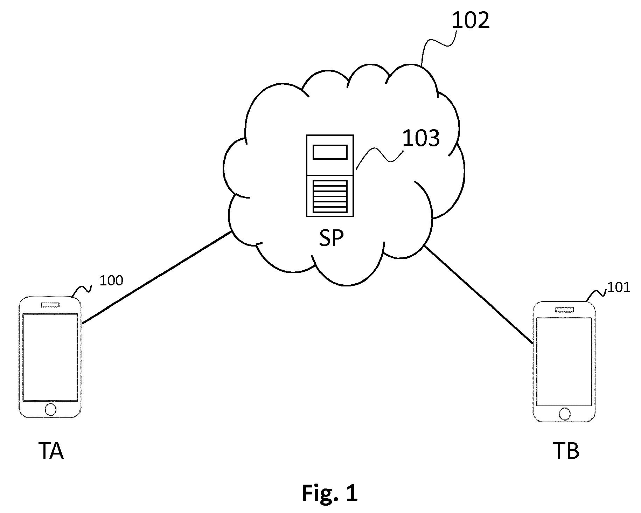

La figure 1 illustre un exemple d'environnement adapté pour la mise en oeuvre de l'invention. Dans cet exemple, l'environnement comprend un premier terminal TA (100) pouvant mettre en oeuvre le procédé de commande de partage synchrone selon un mode particulier de réalisation. L'environnement comprend également un second terminal TB (101) adapté pour la restitution d'une image partagée par l'utilisateur du terminal TA. Les terminaux 100 et 101 sont connectés à un réseau de télécommunication 102, par exemple par l'intermédiaire d'un réseau wifi ou encore un réseau cellulaire de type 3G. Le réseau de télécommunication 102 comprend un serveur de partage SP (103) adapté pour la mise en oeuvre du procédé de partage synchrone selon un mode particulier de réalisation de l'invention. Les terminaux TA et TB peuvent être des terminaux à écran tactile, comme par exemple des terminaux mobiles de type smartphone.

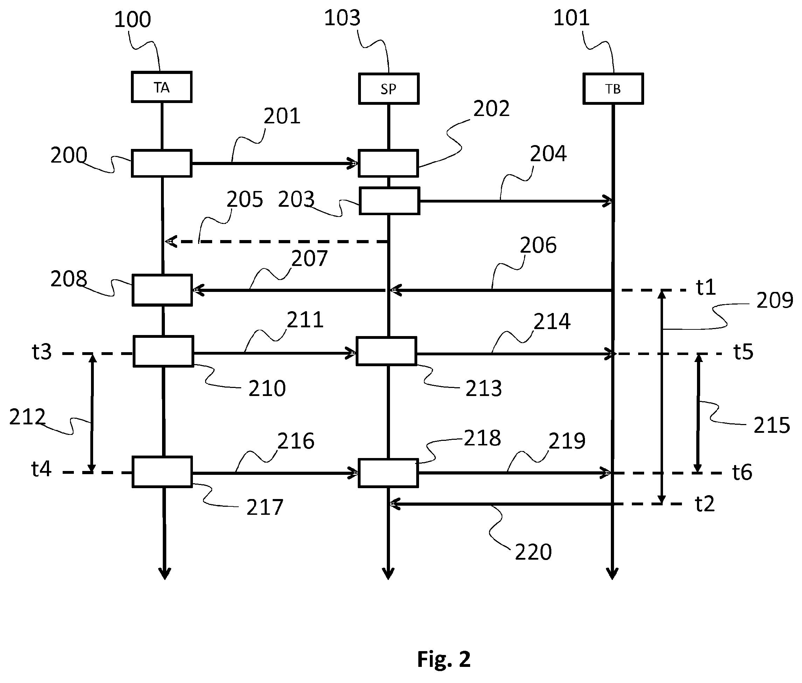

La figure 2 illustre les principales étapes des procédés de partage et de commande de partage synchrone ainsi que les messages pouvant être échangés entre les différentes entités de l'environnement, selon un mode particulier de réalisation.

Selon une première étape 200, le terminal TA (100) transmet au serveur SP (103) une commande de partage d'un document, par exemple une image. La commande peut être transmise par l'intermédiaire d'un message 201, par exemple par l'intermédiaire d'une requête http (HyperText Transfert Protocol). La requête 201 peut en particulier comporter le document à partager et une donnée permettant d'identifier le destinataire du partage, comme par exemple une adresse électronique, une adresse IP (Internet Protocol) ou tout autre moyen d'identification du destinataire. Dans cet exemple, le terminal transmet une image que l'utilisateur du terminal TA souhaite partager avec l'utilisateur du terminal TB.

Lors d'une étape 202 le serveur SP reçoit la commande de partage comportant l'image à partager et mémorise le document, par exemple en le stockant dans une base de données ou encore sous la forme d'un fichier enregistré dans une mémoire persistante.

À l'étape 203, le serveur SP calcule des points de contact à partir de l'image de façon à ce que pour une image donnée, les coordonnées des points de contact correspondent toujours aux même emplacements sur l'image. Pour cela, le serveur SP peut calculer une signature numérique caractéristique du signal d'image. Par exemple, cette signature peut être calculée selon le procédé décrit dans le document *«* EP 1327201 A1 *: System and method for hashing digital images »* de façon à ce que deux images visuellement identiques produisent la même signature numérique. Le nombre de points de contact à calculer peut être prédéfini par un paramétrage sur serveur ou être déterminé automatiquement par exemple en fonction de caractéristiques de l'image, comme par exemple en fonction de ses dimensions. Le nombre et les coordonnées des points de contact peuvent également être déterminés aléatoirement dans une fourchette de valeurs prédéterminée par exemple. Le serveur SP peut ensuite transmettre les coordonnées des points de contact vers le terminal TB (101) par l'intermédiaire d'un message, par exemple un message 204 de type http. Selon un mode de réalisation particulier, le serveur SP peut également transmettre les coordonnées des points de contact au terminal TA, par exemple dans une réponse 205 à la requête http 201 ou encore par un message dédié. Selon un autre mode de réalisation, les coordonnées des points de contact peuvent être calculées par le terminal TA lors de l'étape 200 et transmises au serveur dans le message 201 de commande de partage.

A ce stade, la commande de partage a été reçue par le terminal TB qui peut alors notifier son utilisateur et afficher par exemple des pictogrammes aux emplacements indiqués par les coordonnées des points de contact. Le terminal TB peut alors inviter son utilisateur à effectuer une action sur les points de contact ainsi matérialisés de façon à visualiser l'image. Cette action peut par exemple consister à maintenir un contact avec l'écran du terminal à l'emplacement des points de contact.

A l'instant t1, l'utilisateur du terminal TB effectue une action sur les points de contact, provoquant ainsi l'émission d'un message d'accord de partage 206 à destination du serveur SP. À la réception de ce message, le serveur SP peut ouvrir une fenêtre temporelle 209 associée au terminal TB. Pour cela, le serveur peut par exemple mémoriser, par exemple dans une mémoire RAM (Random Access Memory), le fait que le message d'accord en provenance du terminal TB à bien été reçu. Le serveur SP peut ensuite propager le message d'accord de partage vers le terminal TA, par exemple au moyen d'un message http 207, afin de signaler à l'utilisateur du terminal TA lors d'une étape 208, que le destinataire du partage attend son accord pour visualiser l'image.

A l'instant t3, l'utilisateur du terminal TA peut effectuer une action sur les points de contact et déclencher ainsi l'envoi d'un message d'accord 211 vers le serveur SP lors d'une étape 210. La réception de ce message par le serveur à l'étape 213 peut provoquer l'ouverture d'une fenêtre temporelle 212 associée au terminal TA.

Selon un mode de réalisation particulier, le message d'accord peut être répété à intervalle régulier par le terminal TA tant que la fenêtre temporelle reste ouverte. Par exemple, le terminal TA peut réémettre le message d'accord 211 toutes les 5 secondes, de façon à ce que le serveur SP puisse détecter une perte de connexion. Lorsque le serveur SP reçoit un message d'accord de partage, il peut par exemple armer une horloge ou "timer" à une durée prédéterminée. Lorsque le "timer" expire alors qu'aucun autre message d'accord de partage n'a été reçu, le serveur SP peut envoyer une commande de suppression, par exemple le message 219, vers le second terminal TB de façon à stopper la restitution du document.

Lors de l'étape 213, le serveur peut déterminer que les fenêtres temporelles associées au terminal TA et au terminal TB sont toutes deux ouvertes et déclencher, à l'instant t5, l'ouverture d'une fenêtre temporelle de visualisation 215, pendant laquelle l'utilisateur du terminal TB aura la possibilité de visualiser l'image partagée. Selon l'invention, cette fenêtre temporelle de visualisation peut correspondre à l'intersection des fenêtres temporelles associées au terminal TA et au terminal TB. En d'autres termes, la fenêtre de visualisation n'est ouverte que lorsque les fenêtre associées à TA et TB sont ouvertes simultanément. Pour cela le serveur peut transmettre au terminal TB une commande d'affichage 214 comportant l'image partagée. Le serveur peut par exemple utiliser un message de type http pour transmettre la commande d'affichage et y attacher l'image stockée à l'étape 202.

Ainsi, l'utilisateur du terminal TB peut visualiser l'image tant que l'action sur les points de contact est maintenue simultanément sur les terminaux TA et TB.

A l'instant t4, l'utilisateur du terminal TA peut stopper l'action sur les points de contact de façon à interrompre le partage. L'interruption de l'action par l'utilisateur du terminal TA provoque l'émission d'un message d'abandon du partage (216) à l'étape 217.

La réception du message d'abandon par le serveur lors d'une étape 218 provoque la fermeture de la fenêtre temporelle associée au terminal TA. Pour cela, le serveur peut effacer de sa mémoire le fait que le message d'accord en provenance de TA a été reçu. La fermeture de la fenêtre temporelle 212 associée à TA a pour conséquence la fermeture de la fenêtre temporelle de visualisation 215 à l'instant t6 car cette dernière correspond à l'intersection des fenêtres temporelles associées à TA et à TB. Le serveur SP peut alors émettre une commande de suppression (219) du document partagé vers le terminal TB véhiculée par exemple par un message de type http. La réception de cette commande par le terminal TB peut provoquer l'arrêt de l'affichage de l'image sur le terminal TB et l'effacement de l'image de la mémoire du terminal. Selon un mode de réalisation particulier, l'image peut également être supprimée du serveur SP.

A l'instant t2, l'utilisateur du terminal TB peut cesser l'action sur les points de contact, provoquant ainsi l'émission d'un signal d'abandon 220.

Il faut noter que les instants t1, t2, t3 et t4 peuvent tout à fait être distribués différemment dans le temps. Par exemple, l'instant t2 peut précéder l'instant t4 et c'est alors le message d'abandon 220 qui provoque la fermeture de la fenêtre de visualisation 215 et la fin du partage.

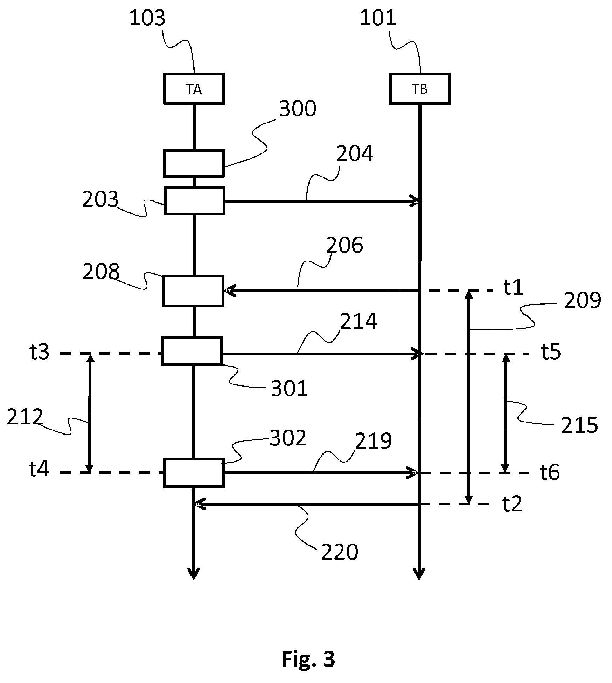

La figure 3 illustre les principales étapes du procédé de partage synchrone ainsi que les messages pouvant être échangés entre les différentes entités de l'environnement, selon un autre mode particulier de réalisation dans lequel le serveur 103 décrit en référence à la figure 2 est intégré au terminal TA (100).
Lors d'une première étape 300, le terminal TA génère une commande de partage d'un document, par exemple une image. Cette commande peut être déclenchée par une action de l'utilisateur sur son terminal, par exemple suite à la prise d'une photographie à l'aide d'une caméra intégrée au terminal. La commande peut consister en un appel de procédure sur le terminal et peut comporter l'image à partager ainsi que les coordonnées du destinataire en paramètre de l'appel. Suite à cet appel de procédure, le terminal réalise l'étape 203 décrite en référence à la figure 2, pendant laquelle des points de contact sont calculés à partir de l'image sélectionnée pour le partage. Suite à la détermination des points de contact, le terminal TA peut transmettre les coordonnées des points de contact vers le terminal TB (101) par l'intermédiaire d'un message, par exemple un message 204 de type http. Le terminal TB peut alors présenter à son utilisateur une interface l'invitant à effectuer une action sur des points de contact matérialisés à l'écran.
A l'instant t1, l'utilisateur du terminal TB effectue une action sur les points de contact, provoquant ainsi l'émission d'un message d'accord de partage 206 à destination du terminal TA. À la réception de ce message, le terminal TA peut ouvrir une première fenêtre temporelle 209 associée au terminal TB et peut indiquer à son utilisateur, à l'occasion d'une étape 208, que le destinataire du partage attend son accord pour visualiser l'image.
A l'instant t3, l'utilisateur du terminal TA peut effectuer une action sur les points de contact et déclencher ainsi l'ouverture d'une seconde fenêtre temporelle 212 associée au terminal TA. L'ouverture simultanée des fenêtres temporelles associées à TA et TB provoque l'ouverture de la fenêtre de visualisation 215 à l'instant t5 et l'envoi, lors de l'étape 301, d'un message d'accord 214 comprenant l'image à partager vers le terminal TB et une commande d'affichage. L'image peut ainsi être visionnée sur le terminal TB pendant la durée ou persiste simultanément l'action sur les points de contact sur les terminaux TA et TB.
Selon un mode de réalisation particulier, le message d'accord peut être répété à intervalle régulier par le terminal TA tant que la fenêtre temporelle reste ouverte. Par exemple, le terminal TA peut réémettre le message d'accord 214 toutes les 5 secondes, de façon à ce que le terminal TB puisse détecter une perte de connexion et stopper la restitution de l'image. Le message d'accord réémit peut ne pas contenir l'image.

A l'instant t4, l'utilisateur du terminal TA peut stopper l'action sur les points de contact de façon à interrompre le partage. L'interruption de l'action par l'utilisateur du terminal TA provoque l'émission d'une commande d'abandon du partage se traduisant par la fermeture de la fenêtre temporelle 212 et par conséquent la fermeture de la fenêtre de visualisation 215. La fermeture de la fenêtre temporelle de visualisation provoque alors l'émission d'une commande de suppression du document 219 à l'étape 302, qui à sa réception par le terminal TB, termine la période d'affichage de l'image à l'instant t6. L'utilisateur du terminal TB peut stopper l'action sur les points de contact à l'instant t2, provoquant alors la fermeture de la fenêtre temporelle associée à TB et l'envoi d'un message d'abandon 220. On peut noter également que l'enchainement des instants t1, t2, t3, t4 , t5 et t6 est donné à titre d'exemple, les actions des utilisateurs sur les points de contact pouvant être ordonnées différemment.
Ainsi, dans les modes de réalisation décrits en référence aux figures 2 et 3 permettent à l'utilisateur du terminal TA de contrôler précisément le moment et le temps de visualisation par l'utilisateur du terminal TB.

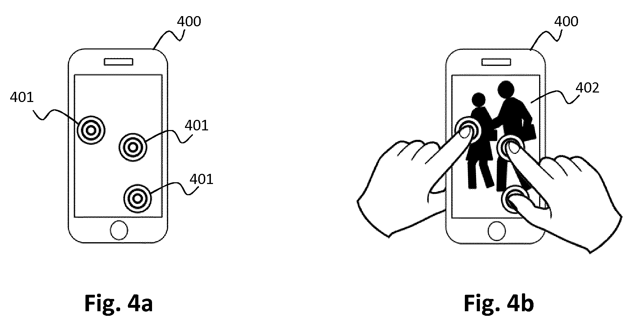

Les figures 4a et 4b illustrent un mode d'action possible sur des points de contact. En particulier, la figure 4a illustre un terminal 400 sur lequel sont matérialisés des points de contact 401. Cette figure peut correspondre à l'affichage du terminal TB suite à la réception du message 204 comportant les coordonnées des points de contact décrit en référence aux figures 2 et 3. La figure 4b illustre quant à elle l'affichage d'une image 402 sur un terminal suite à une action sur les points de contact lorsqu'une fenêtre temporelle de visualisation est ouverte. Cette figure peut correspondre à un affichage du terminal TB lorsque la fenêtre de visualisation 215, décrite en référence aux figures 2 et 3, est ouverte.

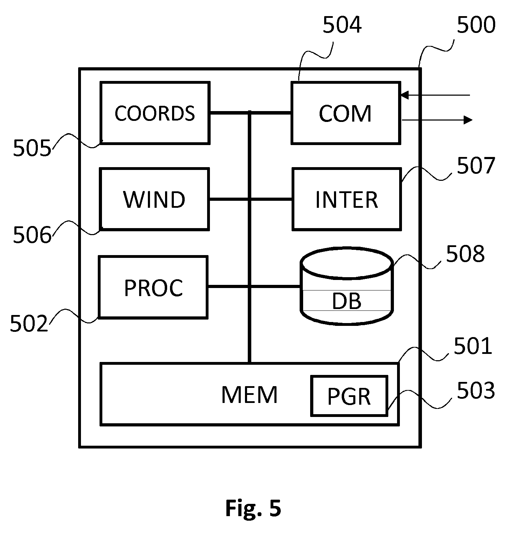

La figure 5 illustre un dispositif 500 mettant en oeuvre le procédé de partage synchrone, selon un mode particulier de réalisation de l'invention. Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en oeuvre le procédé de partage synchrone tel que décrit dans l'invention en référence aux figures 2 et 3, et notamment les étapes de transmission d'un message vers le second terminal comportant les coordonnées d'au moins un point de contact définies à partir du document à partager (203) ; à l'ouverture d'une fenêtre temporelle de visualisation définie par l'intersection d'une première et d'une seconde fenêtre temporelle définies respectivement pour le premier et le second terminal, chacune étant bornée par la réception, en provenance du terminal, d'un message d'accord de partage déclenché par une action sur les points de contact et la réception d'un message d'abandon déclenché par l'arrêt de l'action sur les points de contact, de transmission du document et d'une commande d'affichage du document vers le second terminal (213, 301) ; et de transmission d'une commande de suppression du document à la fermeture de la fenêtre temporelle de visualisation (218, 302).

À l'initialisation, les instructions du programme d'ordinateur 503 sont par exemple chargées dans une mémoire RAM (Random Access Memory en anglais) avant d'être exécutées par le processeur de l'unité de traitement 502. Le processeur de l'unité de traitement 502 met en oeuvre les étapes du procédé de partage synchrone selon les instructions du programme d'ordinateur 503.
Pour cela, le dispositif comprend, outre la mémoire 501, des moyens de communication 504 (COM) permettant au dispositif de se connecter au réseau de télécommunication et d'échanger des données avec d'autres dispositifs par l'intermédiaire du réseau de télécommunications, et par exemple de transmettre un message vers le second terminal comportant les coordonnées d'au moins un point de contact, un document et une commande d'affichage du document ou encore une commande de suppression du document à la fermeture de la fenêtre de visualisation. Ces moyens de communication peuvent par exemple être une interface réseau et peuvent également servir à recevoir des messages de commande de partage, d'accord de partage et d'abandon de partage. Le dispositif comprend également des moyens de calcul 505de coordonnées des points de contact à partir d'un document, de détermination 506 d'une fenêtre temporelle à partir de messages reçus, de calcul 507 d'une intersection entre deux fenêtres temporelles.
Le dispositif comprend également une mémoire persistante 508, par exemple une base de données DB.
Selon un mode particulier de réalisation, le dispositif peut être intégrée dans un équipement réseau de type serveur ou dans un terminal de type téléphone mobile, tablette, appareil photo numérique, ordinateur personnel, ou encore n'importe quel autre équipement connecté à un réseau de communication.

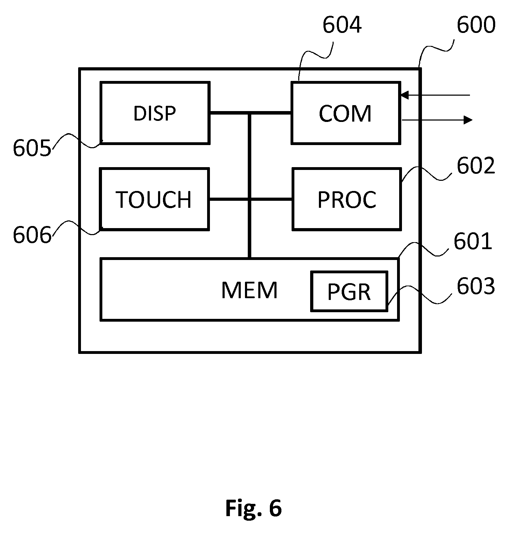

La figure 6 illustre un dispositif 600 mettant en oeuvre le procédé de commande de partage synchrone, selon un mode particulier de réalisation de l'invention. Le dispositif comprend un espace de stockage 601, par exemple une mémoire MEM, une unité de traitement 602 équipée par exemple d'un processeur PROC. L'unité de traitement peut être pilotée par un programme 603, par exemple un programme d'ordinateur PGR, mettant en oeuvre le procédé de commande de partage synchrone tel que décrit dans l'invention en référence à la figure 2, et notamment les étapes de transmission d'une commande de partage du document (200, 300) ; à la réception d'un message d'accord de partage en provenance du second terminal, de transmission d'un message d'accord de partage (210, 301) déclenchant l'ouverture d'une fenêtre temporelle de visualisation lorsqu'une action sur des points de contact est détectée sur l'écran du premier terminal ; et de transmission d'au moins une commande d'abandon du partage du document (217, 302) provoquant la fermeture de la fenêtre temporelle de visualisation lorsque l'arrêt de l'action sur les points de contact est détecté sur l'écran du premier terminal.

À l'initialisation, les instructions du programme d'ordinateur 603 sont par exemple chargées dans une mémoire RAM (Random Access Memory en anglais) avant d'être exécutées par le processeur de l'unité de traitement 602. Le processeur de l'unité de traitement 602 met en oeuvre les étapes du procédé de partage synchrone selon les instructions du programme d'ordinateur 603.
Pour cela, le dispositif comprend, outre la mémoire 601, des moyens de communication 604 (COM) permettant au dispositif de se connecter a un réseau de télécommunication et d'échanger des données avec d'autres dispositifs par l'intermédiaire du réseau de télécommunications, et par exemple de transmettre une commande de partage d'un document, un message d'accord de partage ou d'abandon de partage. Ces moyens de communication peuvent par exemple être une interface réseau et peuvent également servir à recevoir des messages d'accord de partage et de suppression d'un document partagé. Le dispositif comprend également des moyens de détection de coordonnées des points de contact à partir d'un document 606, comme par exemple un écran tactile TOUCH et des moyens d'affichage 605, comme par exemple un écran DISP.
Selon un mode particulier de réalisation, le dispositif peut être intégrée dans un terminal de type téléphone mobile, tablette, appareil photo numérique, ordinateur personnel, ou encore n'importe quel autre équipement connecté à un réseau de communication.
Selon un autre mode de réalisation particulier, un terminal peut comprendre à la fois un dispositif de commande de partage synchrone et un dispositif de partage synchrone tels que décrits ci-dessus.

## Revendications

1. Procédé de partage synchrone d'un document entre un premier et un second terminal, **caractérisé en ce qu'**il comporte les étapes suivantes :
- Transmission d'un message vers le second terminal comportant les coordonnées d'au moins un point de contact à activer sur un écran tactile définies à partir du document à partager (203),
- À l'ouverture d'une fenêtre temporelle de visualisation définie par l'intersection d'une première et d'une seconde fenêtre temporelle définies respectivement pour le premier et le second terminal, chacune étant bornée par la réception, en provenance du terminal pour lequel la fenêtre est définie, d'un message d'accord de partage déclenché par une action sur le au moins un point de contact et d'un message d'abandon déclenché par l'arrêt de l'action sur le au moins un point de contact, transmission du document et d'une commande d'affichage du document vers le second terminal (213, 301), et
- Transmission d'une commande de suppression du document à la fermeture de la fenêtre temporelle de visualisation (218, 302).

2. Procédé selon la revendication 1 **caractérisé en ce qu'**il comporte, à la réception préalable d'une commande de partage du document comportant le document à partager, une étape de mémorisation du document (202).

3. Procédé selon la revendication 1 ou 2 **caractérisé en ce qu'**une commande de suppression du document est émise vers le second terminal lorsqu'aucun message en provenance du premier terminal n'est reçu pendant un intervalle de temps prédéterminé.

4. Procédé de commande de partage synchrone d'un document sur un premier terminal à écran tactile vers un second terminal **caractérisé en ce qu'**il comporte les étapes suivantes:
- Transmission d'une commande de partage du document (200, 300),
- A la réception d'un message d'accord de partage en provenance du second terminal, transmission d'un message d'accord de partage (210, 301) déclenchant l'ouverture d'une fenêtre temporelle de visualisation lorsqu'une action sur au moins un point de contact est détectée sur l'écran du premier terminal, et
- Transmission d'au moins une commande d'abandon du partage du document (217, 302) provoquant la fermeture de la fenêtre temporelle de visualisation lorsque l'arrêt de l'action sur le au moins un point de contact est détecté sur l'écran du premier terminal.

5. Procédé selon la revendication 4 **caractérisé en ce que** le message d'accord de partage est retransmis périodiquement à intervalle prédéterminé tant que la fenêtre temporelle de visualisation est ouverte.

6. Dispositif de partage synchrone de document entre un premier et un second terminal, **caractérisé en ce qu'**il comporte:
- Des moyens de définition de coordonnées (505) d'au moins un point de contact à activer sur un écran tactile à partir du document,
- Des moyens de transmission (504) d'un message vers le second terminal comportant les coordonnées d'au moins un point de contact définies à partir du document à partager,
- Des moyens de détermination (506) d'une fenêtre temporelle à partir de messages reçus,
- Des moyens de calcul (507) d'une intersection entre deux fenêtres temporelles,
- Des moyens de transmission (504) du document et d'une commande d'affichage du document vers le second terminal à l'ouverture d'une fenêtre temporelle de visualisation définie par l'intersection d'une première et d'une seconde fenêtre temporelle définies respectivement pour le premier et le second terminal, chacune étant bornée par la réception, en provenance du terminal pour lequel la fenêtre est définie, d'un message d'accord de partage déclenché par une action sur le au moins un point de contact et d'un message d'abandon déclenché par l'arrêt de l'action sur le au moins un point de contact, et
- Des moyens de transmission d'une commande de suppression du document à la fermeture de la fenêtre temporelle de visualisation (504).

7. Dispositif de commande de partage synchrone de document comportant un écran tactile **caractérisé en ce qu'**il comporte:
- Des moyens de transmission d'une commande de partage de document,
- Des moyens de réception d'un message d'accord de partage,
- Des moyens de détection d'une action sur au moins un point de contact, et
- Des moyens de transmission d'un message d'accord de partage (604) déclenchant l'ouverture d'une fenêtre temporelle de visualisation lorsqu'une action sur au moins un point de contact est détectée sur l'écran à la réception d'un message d'accord de partage en provenance du second terminal, et
- Des moyens de transmission d'au moins une commande d'abandon du partage du document (604) provoquant la fermeture de la fenêtre de partage lorsque l'arrêt de l'action sur le au moins un point de contact est détecté sur l'écran.

8. Serveur **caractérisé en ce qu'**il comprend un dispositif de partage synchrone de document selon la revendication 6.

9. Terminal **caractérisé en ce qu'**il comprend un dispositif de commande de partage synchrone de document selon la revendication 7.

10. Terminal **caractérisé en ce qu'**il comprend un dispositif de partage synchrone de document selon la revendication 6 et un dispositif de commande de partage synchrone de document selon la revendication 7

11. Système de partage synchrone de document **caractérisé en ce qu'**il comprend un serveur conforme à la revendication 8, un premier terminal conforme à la revendication 9 et un second terminal apte à partager de façon synchrone un document avec le premier terminal.

12. Programme d'ordinateur comportant les instructions pour l'exécution du procédé de partage synchrone de document selon l'une quelconque des revendications 1 à 3 et/ou du procédé de commande de partage synchrone de document selon la revendication 4, lorsque le programme est exécuté par un processeur.

13. Support d'enregistrement lisible par un ordinateur sur lequel est enregistré un programme d'ordinateur comprenant des instructions pour l'exécution des étapes du procédé de partage synchrone de document selon l'une des revendications 1 à 3 ou les instructions pour l'exécution des étapes du procédé de commande de partage synchrone de document selon la revendication 4.

## Patentansprüche

1. Verfahren zur synchronen gemeinsamen Nutzung eines Dokuments zwischen einem ersten und einem zweiten Endgerät, **dadurch gekennzeichnet, dass** es die folgenden Schritte aufweist:
- Übertragung einer Mitteilung zum zweiten Endgerät, die die Koordinaten mindestens eines auf einem Berührungsbildschirm zu aktivierenden Kontaktpunkts aufweist, die ausgehend von dem gemeinsam zu nutzenden Dokument (203) definiert werden,
- beim Öffnen eines zeitlichen Sichtfensters, das durch den Schnittpunkt eines ersten und eines zweiten für das erste bzw. zweite Endgerät definierten Zeitfensters definiert wird, die je von dem Empfang, ausgehend von dem Endgerät, für das das Fenster definiert ist, einer Zustimmungsmitteilung zur gemeinsamen Nutzung, die durch eine Einwirkung auf den mindestens einen Kontaktpunkt ausgelöst wird, und einer Abbruchmitteilung eingegrenzt werden, die durch das Ende der Einwirkung auf den mindestens einen Kontaktpunkt ausgelöst wird, Übertragung des Dokuments und eines Anzeigebefehls des Dokuments an das zweite Endgerät (213, 301), und
- Übertragung eines Löschbefehls des Dokuments beim Schließen des zeitlichen Sichtfensters (218, 302).

2. Verfahren nach Anspruch 1, **dadurch gekennzeichnet, dass** es beim vorherigen Empfang eines Befehls zur gemeinsamen Nutzung des Dokuments, der das gemeinsam zu nutzende Dokument aufweist, einen Schritt des Speicherns des Dokuments (202) aufweist.

3. Verfahren nach Anspruch 1 oder 2, **dadurch gekennzeichnet, dass** ein Löschbefehl des Dokuments zum zweiten Endgerät gesendet wird, wenn keine vom ersten Endgerät kommende Mitteilung während eines vorbestimmten Zeitraums erfasst wird.

4. Verfahren zur Steuerung einer synchronen gemeinsamen Nutzung eines Dokuments auf einem ersten Endgerät mit Berührungsbildschirm zu einem zweiten Endgerät, **dadurch gekennzeichnet, dass** es die folgenden Schritte aufweist:
- Übertragung eines Befehls zur gemeinsamen Nutzung des Dokuments (200, 300),
- Bei Empfang einer Zustimmungsmitteilung zur gemeinsamen Nutzung ausgehend vom zweiten Endgerät, Übertragung einer Zustimmungsmitteilung zur gemeinsamen Nutzung (210, 301), die das Öffnen eines zeitlichen Sichtfensters auslöst, wenn eine Einwirkung auf mindestens einen Kontaktpunkt auf dem Bildschirm des ersten Endgeräts erfasst wird, und
- Übertragung mindestens eines Abbruchbefehls der gemeinsamen Nutzung des Dokuments (217, 302), der das Schließen des zeitlichen Sichtfensters bewirkt, wenn das Ende der Einwirkung auf den mindestens einen Kontaktpunkt auf dem Bildschirm des ersten Endgeräts erfasst wird.

5. Verfahren nach Anspruch 4, **dadurch gekennzeichnet, dass** die Zustimmungsmitteilung zur gemeinsamen Nutzung periodisch in vorbestimmten Abständen erneut übertragen wird, so lange das zeitliche Sichtfenster offen ist.

6. Vorrichtung zur synchronen gemeinsamen Nutzung eines Dokuments zwischen einem ersten und einem zweiten Endgerät, **dadurch gekennzeichnet, dass** sie aufweist:
- Einrichtungen zur Definition von Koordinaten (505) mindestens eines auf einem Berührungsbildschirm zu aktivierenden Kontaktpunkts ausgehend vom Dokument,
- Einrichtungen zur Übertragung (504) einer Mitteilung an das zweite Endgerät, die die Koordinaten mindestens eines Kontaktpunkts aufweist, die ausgehend von dem gemeinsam zu nutzenden Dokument definiert werden,
- Einrichtungen zur Bestimmung (506) eines Zeitfensters ausgehend von empfangenen Mitteilungen,
- Einrichtungen zur Berechnung (507) eines Schnittpunkts zwischen zwei Zeitfenstern,
- Einrichtungen zur Übertragung (504) des Dokuments und eines Anzeigebefehls des Dokuments an das zweite Endgerät beim Öffnen eines zeitlichen Sichtfensters, das durch den Schnittpunkt eines ersten und eines zweiten Zeitfensters definiert wird, die für das erste bzw. zweite Endgerät definiert sind, die je durch den Empfang, von dem Endgerät, für das das Fenster definiert ist, einer Zustimmungsmitteilung zur gemeinsamen Nutzung, die durch eine Einwirkung auf den mindestens einen Kontaktpunkt ausgelöst wird, und einer Abbruchmitteilung eingegrenzt werden, die durch das Ende der Einwirkung auf den mindestens einen Kontaktpunkt ausgelöst wird, und
- Einrichtungen zur Übertragung eines Löschbefehls des Dokuments beim Schließen des zeitlichen Sichtfensters (504).

7. Vorrichtung zur Steuerung einer synchronen gemeinsamen Nutzung eines Dokuments, die einen Berührungsbildschirm aufweist, **dadurch gekennzeichnet, dass** sie aufweist:
- Einrichtungen zur Übertragung eines Befehls zur gemeinsamen Nutzung,
- Einrichtungen zum Empfang einer Zustimmungsmitteilung zur gemeinsamen Nutzung,
- Einrichtungen zur Erfassung einer Einwirkung auf mindestens einen Kontaktpunkt, und
- Einrichtungen zur Übertragung einer Zustimmungsmitteilung zur gemeinsamen Nutzung (604), die das Öffnen eines zeitlichen Sichtfensters auslöst, wenn eine Einwirkung auf mindestens einen Kontaktpunkt auf dem Bildschirm bei Empfang einer vom zweiten Endgerät kommenden Zustimmungsmitteilung zur gemeinsamen Nutzung erfasst wird, und
- Einrichtungen zur Übertragung mindestens eines Abbruchbefehls der gemeinsamen Nutzung des Dokuments (604), der das Schließen des Fensters zur gemeinsamen Nutzung bewirkt, wenn das Ende der Einwirkung auf den mindestens einen Kontaktpunkt auf dem Bildschirm erfasst wird.

8. Server, **dadurch gekennzeichnet, dass** er eine Vorrichtung zur synchronen gemeinsamen Nutzung eines Dokuments nach Anspruch 6 enthält.

9. Endgerät, **dadurch gekennzeichnet, dass** es eine Vorrichtung zur Steuerung einer synchronen gemeinsamen Nutzung eines Dokuments nach Anspruch 7 enthält.

10. Endgerät, **dadurch gekennzeichnet, dass** es eine Vorrichtung zur synchronen gemeinsamen Nutzung eines Dokuments nach Anspruch 6 und eine Vorrichtung zur Steuerung einer synchronen gemeinsamen Nutzung eines Dokuments nach Anspruch 7 enthält.

11. System zur synchronen gemeinsamen Nutzung eines Dokuments, **dadurch gekennzeichnet, dass** es einen Server nach Anspruch 8, ein erstes Endgerät nach Anspruch 9 und ein zweites Endgerät enthält, das ein Dokument mit dem ersten Endgerät synchron gemeinsam nutzen kann.

12. Computerprogramm, das die Anweisungen zur Ausführung des Verfahrens zur synchronen gemeinsamen Nutzung eines Dokuments nach einem der Ansprüche 1 bis 3 und/oder des Verfahrens zur Steuerung einer synchronen gemeinsamen Nutzung eines Dokuments nach Anspruch 4 aufweist, wenn das Programm von einem Prozessor ausgeführt wird.

13. Computerlesbarer Aufzeichnungsträger, auf dem ein Computerprogramm gespeichert ist, das Anweisungen für die Ausführung der Schritte des Verfahrens zur synchronen gemeinsamen Nutzung eines Dokuments nach einem der Ansprüche 1 bis 3 oder die Anweisungen zur Ausführung des Verfahrens zur Steuerung einer synchronen gemeinsamen Nutzung eines Dokuments nach Anspruch 4 enthält.

## Claims

1. Method of synchronous sharing of a document between a first and a second terminal, **characterized in that** it comprises the following steps:
- Transmission of a message to the second terminal comprising the coordinates of at least one contact point to be activated on a touchscreen which are defined on the basis of the document to be shared (203),
- Upon the opening of a viewing time window defined by the intersection of a first and of a second time window defined respectively for the first and the second terminal and each being bounded by the receipt, originating from the terminal for which the window is defined, of a sharing agreement message triggered by an action on the at least one contact point and of an abandonment message triggered by the stopping of the action on the at least one contact point, transmission of the document and of a command to display the document to the second terminal (213, 301), and
- Transmission of a command to delete the document upon the closing of the viewing time window (218, 302).

2. Method according to Claim 1, **characterized in that** it comprises, upon the prior receipt of a command to share the document comprising the document to be shared, a step of storing the document (202).

3. Method according to Claim 1 or 2, **characterized in that** a command to delete the document is sent to the second terminal when no message originating from the first terminal is received during a predetermined time interval.

4. Method of control of synchronous sharing of a document on a first touchscreen terminal to a second terminal, **characterized in that** it comprises the following steps:
- Transmission of a command to share the document (200, 300),
- Upon receipt of a sharing agreement message originating from the second terminal, transmission of a sharing agreement message (210, 301) triggering the opening of a viewing time window when an action on at least one contact point is detected on the screen of the first terminal, and
- Transmission of at least one command to abandon the sharing of the document (217, 302) causing the closing of the viewing time window when the stopping of the action on the at least one contact point is detected on the screen of the first terminal.

5. Method according to Claim 4, **characterized in that** the sharing agreement message is retransmitted periodically at predetermined intervals as long as the viewing time window is open.

6. Device for synchronous document sharing between a first and a second terminal, **characterized in that** it comprises:
- Means (505) for defining coordinates of at least one contact point to be activated on a touchscreen on the basis of the document,
- Means (504) for transmitting a message to the second terminal comprising the coordinates of at least one contact point defined on the basis of the document to be shared,
- Means (506) for determining a time window on the basis of messages received,
- Means (507) for calculating an intersection between two time windows,
- Means (504) for transmitting the document and a command to display the document to the second terminal upon the opening of a viewing time window defined by the intersection of a first and of a second time window defined respectively for the first and the second terminal and each being bounded by the receipt, originating from the terminal for which the window is defined, of a sharing agreement message triggered by an action on the at least one contact point and of an abandonment message triggered by the stopping of the action on the at least one contact point, and
- Means for transmitting a command to delete the document upon the closing of the viewing time window (504).

7. Device for control of synchronous document sharing comprising a touchscreen **characterized in that** it comprises:
- Means for transmitting a document sharing command,
- Means for receiving a sharing agreement message,
- Means for detecting an action on at least one contact point, and
- Means for transmitting a sharing agreement message (604) triggering the opening of a viewing time window when an action on at least one contact point is detected on the screen upon receipt of a sharing agreement message originating from the second terminal, and
- Means for transmitting at least one command to abandon the sharing of the document (604) causing the closing of the sharing window when the stopping of the action on the at least one contact point is detected on the screen.

8. Server **characterized in that** it comprises a device for synchronous document sharing according to Claim 6.

9. Terminal **characterized in that** it comprises a device for control of synchronous document sharing according to Claim 7.

10. Terminal **characterized in that** it comprises a device for synchronous document sharing according to Claim 6 and a device for control of synchronous document sharing according to Claim 7.

11. System for synchronous document sharing **characterized in that** it comprises a server in accordance with Claim 8, a first terminal in accordance with Claim 9 and a second terminal able to share in a synchronous manner a document with the first terminal.

12. Computer program comprising the instructions for the execution of the method of synchronous document sharing according to any one of Claims 1 to 3 and/or of the method of control of synchronous document sharing according to Claim 4, when the program is executed by a processor.

13. Recording medium readable by a computer on which is recorded a computer program comprising instructions for the execution of the steps of the method of synchronous document sharing according to one of Claims 1 to 3 or the instructions for the execution of the steps of the method of control of synchronous document sharing according to Claim 4.
